(19) Europäisches Patentamt / European Patent Office / Office européen des brevets

(11) **EP 3 370 538 B1**

(12) **EUROPEAN PATENT SPECIFICATION**

(45) Date of publication and mention
of the grant of the patent:
**19.06.2019 Bulletin 2019/25**

(21) Application number: **16784459.6**

(22) Date of filing: **14.10.2016**

(51) Int Cl.:
*A23F 3/06* *(2006.01)*          *A23F 3/16* *(2006.01)*

(86) International application number:
**PCT/EP2016/074793**

(87) International publication number:
**WO 2017/076612 (11.05.2017 Gazette 2017/19)**

(54) **A PROCESS OF PRODUCING A TEA PRODUCT**

VERFAHREN ZUR HERSTELLUNG EINES TEEPRODUKTS

PROCÉDÉ DE PRODUCTION D'UN PRODUIT DE THÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2015 EP 15192552**

(43) Date of publication of application:
**12.09.2018 Bulletin 2018/37**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **BASAVARAJU, Lokesh**
**Bangalore 560066 (IN)**
• **BHASKAR, Ajit**
**Bangalore 560066 (IN)**
• **GUTTAPADU, Sreeramulu**
**Bangalore 560066 (IN)**
• **JAHABARDEEN, Mohamed, Sirajudeen**
**Bangalore 560066 (IN)**
• **PALAGIRI, Swathy**
**Bangalore 560066 (IN)**
• **SINGH, Gurmeet**
**Bangalore 560066 (IN)**

(74) Representative: **Warner, Guy Jonathan**
**Unilever N.V.**
**Unilever Patent Group**
**Olivier van Noortlaan 120**
**3133 AT Vlaardingen (NL)**

(56) References cited:
**WO-A1-2011/151237          WO-A1-2013/075912**
**WO-A1-2014/206883          US-A- 4 051 264**
**US-B1- 6 254 902**

**Description**

**Technical Field**

The present invention relates to a process of producing a tea product and more particularly the present invention relates to a process of producing a black tea product.

**Background of the invention**

Tea is one of the most extensively consumed beverages in the world. There are different types of tea e.g. black tea, green tea, oolong tea, white tea etc. Among the different types, black tea products are more popular. Black tea is generally prepared by a process which includes the steps of withering, macerating, fermenting and firing/drying. The characteristic colour, flavour and aroma of black tea are produced during fermentation. The term fermentation is traditionally used in the tea processing to refer to enzymatic oxidation. The tea is dried at high temperature after fermentation to arrest the enzyme action and to bring down the moisture to a low level.

Tea-based beverages can be consumed either as a hot beverage or as a cold beverage or maybe as a beverage which is at ambient (around 25° C) temperature. But, whatever way these tea-based beverages are consumed, the sensorials of these tea products are of prime concern. In case of black tea beverage, consumers consider sensorials as the prime factor. Sensorials of black tea product mainly include colour and haze. Colour imparts impact to the black tea liquor, and it is believed that black tea with rich red coloured liquor is widely preferred by consumers.

There have been efforts to provide black tea products with enhanced red colour.

US 2008/0118602 discloses a process for the manufacture of a tea product which is readily infusible and has improved red colour. The process comprises contacting black tea with ascorbic acid and/or its salts, an oxidizing agent and water for a period of at least 5 minutes followed by drying to prepare a tea product that is infusible in water at 5 to 100°C.

We have also found that in whatever way a leaf tea product is brewed, the leaf tea waste/residue left over after brewing the beverage contains a good amount of polyphenols which remain unused and go to waste after the brewing process. Polyphenols are considered to be a major constituent in most tea products. It is believed that the polyphenols provide the required taste (astringency, bitterness etc.) for a tea product and also provide various health benefits. Polyphenols are known to be one of the "tea goodies".

There has also been efforts to increase the polyphenols content in a tea product.

WO 2013/075912 discloses a process for producing a black tea product with enhanced sensorials. The process involves a step of anaerobic incubation at specific temperatures and for specific durations, and provides tea products having a relatively high amount of catechins, a high amount of theaflavins and high a amount of polyphenols, which products have the sensorials of black tea, but without the addition of any exogenous theaflavins and/or catechins.

The invention disclosed in WO 2012/133901 is said to provide a polyphenol increasing agent for plant leaves that enables an increase in the storage life of plant leaves such as leaf vegetables and tea leaves, a polyphenol and amino acid increasing agent for plant leaves, a resin pellet, a plant leaf storage sheet, and a method for manufacturing a plant leaf storage sheet.

Enhancement of the red liquor colour is known from the prior art, but still there is a need to provide a tea product which delivers a liquor having much higher red colour than what is known. At the same time it is it is also needed to provide a tea product with enhanced polyphenol delivery at the end cup, which includes theaflavins.

It is therefore an object of the present invention to provide a tea product that delivers a liquor with enhanced red color.

It is another object of the present invention to provide a tea product with enhanced polyphenol delivery at the end cup.

It is yet another object of the present invention to provide a tea product with enhanced theaflavins delivery at the end cup.

It is a further object of the present invention to provide a process which improves the extractability of the polyphenols from the tea leaf.

It is a yet a further object of the present invention to provide a tea product that delivers a liquor with enhanced red color and which provides enhanced polyphenol delivery at the end cup.

The present inventors while working extensively to solve these problems have surprisingly found that a process that includes a step of anaerobic incubation followed by comminution and then a step of mechanical shear produces a tea product that delivers a liquor with significantly increased red colour with higher polyphenol delivery at the end cup and thereby satisfies one or more of the objects of the invention.

## Summary of the invention

In a first aspect the present invention provides a process for producing a tea product comprising the steps of;

a. incubating fresh leaf at a temperature in the range 4 °C to 60 °C under anaerobic conditions for a period of 4 to 36 hours;
b. subjecting the incubated leaf to comminution to produce comminuted dhool; and
c. subjecting the comminuted dhool to a step of shear for 30 seconds to 15 minutes by passing the dhool though an instrument with shear rate in the range of 5000 /s to 25000 /s, wherein the shear rate is defined as:

$$\text{Shear Rate} = \frac{\pi * D * N}{H}$$

wherein D is the shaft diameter, H is the channel depth and N is the rotational speed, and wherein the filling percentage of the dhool in the instrument is in the range from 40 to 80% of the capacity.

Any feature of one aspect of the present invention may be utilized in any other aspect of the invention. The word "comprising" is intended to mean "including" but not necessarily "consisting of" or "composed of." In other words, the listed steps or options need not be exhaustive. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

"Tea" for the purposes of the present invention means material from Camellia sinensis var. sinensis and/or Camellia sinensis var. assamica. Especially preferred is material from var. assamica as this has a higher level of tea actives than var. sinensis.
"Leaf tea" for the purposes of this invention means a tea product that contains tea leaves and/or stem in an un-infused form, and that has been dried to a moisture content of less than 30% by weight, and usually has a water content in the range 1 to 10%, preferably less than 5% by weight (i.e. "made tea").
"Black tea" refers to substantially fermented tea.
"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.
"Fresh tea leaves" refers to tea leaves, buds and/or stem that have never been dried to a water content of less than 30% by weight, and usually have water content in the range 60 to 90%.
The present invention provides a process of producing a tea product comprising the steps of:

a. incubating fresh leaf at a temperature in the range 4°C to 60°C under anaerobic conditions for a period of 4 to 36 hours;
b. subjecting the incubated leaf to comminution to produce comminuted dhool; and
c. subjecting the comminuted dhool to a step of shear for 30 seconds to 15 minutes by passing the dhool though an instrument with shear rate in the range of 5000/s to 25000/s wherein the shear rate is defined as:

$$\text{Shear Rate} = \frac{\pi * D * N}{H}$$

wherein D is the shaft diameter, H is the channel depth and N is the rotational speed, and wherein the filling percentage of the dhool in the instrument is in the range from 40 to 80% of the capacity.

## Process of producing the tea product

### Step (a):

Step (a) includes incubating the fresh tea leaf at a temperature in the range 4°C to 60°C under anaerobic conditions for a period of 4°C to 36 hours. Preferably the moisture content of the fresh leaf is in the range of 60 to 80% by weight of the tea leaf. The term "anaerobic conditions" as used herein means that the gas phase in contact with the leaf has less than 3% oxygen by volume. The amount of oxygen in the gas phase in contact with the leaf is preferably less than 2%, more preferably less than 1%. It is particularly preferred that the gas phase in contact with the leaf is substantially free of oxygen.

Anaerobic conditions:

The anaerobic conditions are optionally and preferably achieved by:

i. placing the fresh tea leaf in a container, and closing the container, or;
ii. placing the tea leaf in a container, purging a gas other than oxygen through the container, and closing the container, or placing the leaf in an airtight chamber or under vacuum.

By placing the fresh leaf in a container and closing the container, the oxygen concentration in the gas phase decreases with time and anaerobic conditions are achieved after keeping the container closed for a certain amount of time. The container is closed for a duration of preferably greater than about 3 hours, more preferably greater than 4 hours and most preferably greater than about 6 hours or even greater than about 8 hours.

Alternatively and more preferably, the anaerobic conditions are achieved by placing the leaf in a container, purging a gas other than oxygen through the container and closing the container. The gas other than oxygen is preferably nitrogen or carbon dioxide, more preferably nitrogen.

Once the container is closed as described above, there is no particular restriction as to the pressure in the container. The pressure inside the closed container is preferably from 1 to 1000 mm Hg absolute, more preferably 10 to 800 mm Hg absolute and most preferably about 20 mm Hg.

It is preferred that the moisture loss from the leaf during the step (a) is as low as possible. This is advantageously and conveniently achieved by carrying out the step (a) under closed conditions. The incubated tea leaf after step (a) comprises water in the range of preferably from 70 to 75% by weight.

Incubation temperature:

Step (a) is at a temperature in the range 4°C to 60 °C, preferably in the range 4°C to 55°C, more preferably in the range 10°C to 40°C.

Duration of anaerobic incubation:

The fresh leaf is incubated under anaerobic conditions for a period of 4 to 36 hours, preferably for a period of 6 to 30 hours, more preferably for a period of 8 to 25 hours, most preferably for a period of 10 to 24 hours.

### Step (b):

After the incubation step the incubated leaf is subjected to comminution to produce comminuted dhool. This may preferably be carried out by crushing, tearing and curling which is known as CTC. One or more CTC steps may be carried out. In this step the incubated leaf breaks up and releases enzymes that exist in the leaf.

Or after the incubation step, the incubated tea leaf is rolled in an orthodox roller or comminuted in a rotorvane or combination thereof. During these steps precursors present in the tea leaf become amenable to the enzymes.

Preferably the comminuted leaf undergoes fermentation just after step (b). Fermentation is preferably carried out by keeping the leaf at a temperature of 15°C to 35°C for from 15 minutes to 3 hours. Preferably the temperature of the fermentation is between 25°C to 35°C and more preferably around 30°C to 35°C. The time for fermentation preferably is from 30 minutes to 3 hours and more preferably 1 to 3 hours. In this stage the leaf undergoes enzymatic reactions which produce the typical black tea characteristics.

Alternately the fermentation may also be preferably carried out just following step (c) of the present process.

**Step (c):**

At step (c) the comminuted dhool is subjected to shear for 30 seconds to 15 minutes by passing the dhool through an instrument with shear rate in the range of 5000 /s to 25000/s.

The term 'shear' generally means the act of producing some strain in the structure of a substance/material. Shear as mentioned herein preferably means damaging the comminuted dhool in a controlled way wherein the residence time is quite high. The direction of application of force and the stress transfer preferably to be perpendicular to each other. In case of size reduction of tea leaves in a CTC (cut, tear, curl) machine the residence time is in the range of 10 to 100 milliseconds. Hence, CTC process not able to achieve the technical benefit of the shear as per the present invention.

In the present invention, as mentioned above, the shear is produced by passing the dhool through an instrument. This preferably done by using a mechanical device. The preferred mechanical devices are screw press, screw plates, plough shear mixer, screw tubes etc.

The dhool is exposed to shear, preferably for 30 seconds to 5 minutes and more preferably 30 seconds to 3 minutes.

The shear rate for the above step is preferably in the range of 10000 /s to 15000 /s.

The shear is the rate at which a material deforms at a given speed in a channel having a defined depth and diameter. For the purpose of the current invention, where comminuted dhool (either preferably at pre-fermentation or post fermentation stage) is subjected to shear in a device with a shaft diameter D cm and with a channel depth of H cm of at N rpm, then the shear rate is:

$$\text{Shear Rate} = \frac{\pi * D * N}{H}$$

For this kind of equipment, there is a rotating shaft inside a channel through which the material is to be passed. The rotational motion of this shaft conveys the material from one end (inlet) of the instrument to the other end (outlet). During this conveyance, the material experiences shear against the wall of the channel and the shaft. When the shaft is preferably having screw like extensions, it is known as screw press. In the above equation 'D' is the diameter of the shaft and 'H' is the channel depth. Channel depth means the longitudinal distance from the shaft to the wall of the channel. Therefore, 'H+D' can be considered as the channel diameter.

For a screw press wherein the diameter is 12.7 cm with a channel depth of 0.1 cm and at 25 rpm, the shear rate as calculated using the above equation is approximately 10000/s.

Preferably, pressure applied for the process is in the range of 0.1 to 10 bars, more preferably 0.1 to 5 bars, still more preferably 0.1 to 2 bar and most preferably 0.1 to 0.5 bar.

The filling percentage of the dhool in said instrument is also considered as a controlling parameter to obtain higher benefit of polyphenol delivery at the end cup.

The words "filling percentage" means the percentage of the instrument's available volume (i.e. capacity) that is filled by the dhool. The filling percentage of the dhool in said instrument is in the range of 40 to 80% of the capacity.

After step (c) the comminuted dhool may preferably be dried. During drying step, the dhool is dried to moisture content preferably less than 10% by weight of the tea leaf, more preferably less than 5 % by weight of the tea leaf, to obtain the black leaf tea product.

The drying step is preferably carried out by thermal drying, freeze drying or vacuum drying.

Thermal drying is preferably carried out by contacting the leaf with air; with the temperature of air being preferably 80°C to 130°C, more preferably 90°C to 130°C, most preferably 100°C to 120°C. Thermal drying may be carried out in any conventional dryer. However, a fluidized bed dryer or a tray dryer is particularly preferred for thermal drying.

The leaf can also be dried by vacuum drying. During vacuum drying the tea leaf is subjected to an absolute pressure of preferably from 5 to 500 mm Hg, more preferably from 50 to 300 mm Hg and most preferably from 100 to 200 mm Hg. Vacuum drying is carried out at a temperature in the range of preferably 20°C to 70°C, more preferably 25°C to 60 °C and most preferably 30°C to 55°C. Vacuum drying may be carried out in any suitable vacuum drier, preferably in a rotary vacuum drier.

**The tea product**

A tea product as obtained by the process of the present invention is also described here, but not claimed and does not form part of the invention.

The lactic acid content in the product as obtained/obtainable by the process of the present invention is preferably in the range of 0.05 to 1% by weight of the tea product. Preferably the lactic acid content is in the range of 0.05 to 0.5 % by weight and most preferably 0.1 to 1 % by weight

The ethanol content in the product as obtained/obtainable by the process of the present invention is preferably in the range of 0.01 to 0.1% preferably 0.01 to 0.05 % by weight of the tea product.

A leaf tea blend which comprises 5 to 50%, preferably 10 to 40% and most preferably 20 to 30% of a tea product as obtained/obtainable by the process of the present invention is also within the scope of the present invention.

A tea blend is a mixture of two or more different tea products. The tea blend can have different sensorials than the individual components mixed to make the blend. In tea industry the final packaged tea product is often produced by blending different tea products to meet the preference of different kinds of consumers.

**Examples:**

Measurements methods:

(a) Colour measurement:

For the colour measurement tea infusions were prepared. The infusion was prepared by adding 200 mL of boiling water to 2 g of tea leaf, allowing it to stand for 2 minutes and stirring once before straining.

Ultra scan visible range colour measurement spectrophotometer (Model: UltraScan Vis, made in USA) is a Dual beam xenon flash Spectrophotometer (Hunter lab) used to measure the black tea infusion colour. The dual beam optical system uses two diode arrays and has an effective bandwidth of 10nm. Measurements were made using a quartz cuvette of 10 mm path length. Tea infusion was filled up to the brim in the cuvette and placed in the instrument for colour measurement. The instrument was calibrated using a standard white tile (Hunterlab Diffuse/8°, mode-RSEX, Port-1" and area- large) in accordance with the instructions provided in the instructions manual. The L*a*b* values were measured at room temperature (approx. 25°C).

The maximum value for L* is 100, which represents a perfect reflecting diffuser. The minimum is L*=0, which represents black. The a* and b* axis have no specific numerical limits. Positive a* is red and negative a* is green. Similarly, positive b* is yellow and negative b* is blue.

(b) Delivered Polyphenols (DPP) content:

Delivered polyphenols means, the amount of polyphenols available at the end cup after brewing. For measuring delivered polyphenols content, the same ISO method for the determination of content of total polyphenols in tea - Colorimetric method using Folin-Cicalteu reagent (ISO 14502-1:2005) was used. However instead of the leaf, infusion of the tea leaf was prepared by brewing 2 g of black tea in 200mL of boiling water as described previously.

(c) Delivered Theaflavins (DTF) content:

For the measurement infusions of the different tea samples were prepared by brewing 2 g of black tea in 200mL of boiling water as described previously. The Samples were analyzed by HPLC using an octadecylsilica (C18) column (Nova-pak ex. Waters, 3.9 mm i.d. $\times$ 150 mm) with detection at a wavelength of 380 nm, column temperature of 40°C, injection volume of 20 microlitres and flow rate of 1 mL/min. The mobile phases for the theaflavin analysis were 2% (v/v) acetic acid in water (as mobile phase A) and acetonitrile (as mobile phase B). A linear gradient from 8% B to 69% B over 50 min was used to separate the theaflavins following which the column was equilibrated with 8% of buffer A for 5 min. Pure theaflavins (Sigma Aldrich, > 90%, HPLC grade) were used as standard for quantification.

(d) Measurement of Ethanol content:

Ethanol was estimated by using GC FID (Gas Chromatography with Flame Ionization Detector) method. Calibration curve was generated by using pure ethanol in a range of 10 to 200 ppm. Tea samples were prepared, by weighing 500 mg of tea leaves (in powdered form) in 5 mL of milli-Q water in 20 mL sample vials with agitation for 40 min. GC FID which was used for estimation of ethanol was supplied by Varian®.

Chromatographic conditions used for estimation of ethanol is as follows:
Column: CP Select 624 CB 30 m x 0.32 mm ID: Oven Temperature 180°C, Injector Temperature 250°C, FID Detector Temperature 280°C, Nitrogen was used as a carrier gas with flow rate 1mL/min; make up gas was supplied into the detector at the speed of 20mL/min; Injection volume of the sample was 1 mL: head space sample and syringe temperature was maintained 100°C. The peak area obtained for ethanol in the tea samples was used to calculate the ethanol content in the sample by using calibration curve for pure ethanol.

(e) Measurement of Lactic acid content:

Lactic acid was estimated by using HPLC method. Calibration curve was generated by using pure lactic acid in the range of 100 to 500 ppm. Lactic acid was extracted from tea leaf by transferring 1g of tea leaves in a 100 mL of volumetric flask. After that 25 ml of water at 75°C was poured and made up the volume to 100 mL and sonicated for about 30 minutes. Samples were then centrifuged. Clear supernatant was used for estimating the lactic acid. HPLC instrument which was used for this analysis was supplied by Agilent®.
Conditions for the HPLC was as follows:

Column: C18 Phenomenex
Sample Volume: 20 μL
The mobile phase: 0.1N Sodium sulfate @ pH 3.5 was used at the flow rate of 1mL/min at 25°C.
Lactic acid was detected 210 nm.

Concentration of lactic acid was calculated by measuring the area under the peak, using calibration curve for pure lactic acid.

Preparation of the different tea products

Example A:

Fresh tea leaves were collected from South Indian tea plantation followed by 18 hours of withering. After that the tea leaves were subjected to CTC (cut tear curl) for 4 times to obtain macerated dhool. The macerated dhool was then fermented (exposed to air at 25°C) for 90 minutes followed by drying the fermented dhool at 120°C (thermal drying) till the moisture level went down to less than 5% by weight to obtain a black leaf tea product.

Example B:

In this example the black leaf tea product was prepared by taking fresh tea leaves from South Indian tea plantation. These leaves were then placed in an air-tight aseptic plastic bag, sealed and incubated for 18 hours at around 25°C. After that the tea leaves were subjected to CTC (cut tear curl) for 4 times to obtain macerated dhool. The residence time of the leaf/dhool for the CTC process was 10 milliseconds. The macerated dhool was fermented (exposed to air at 25°C) for 90 minutes. After the fermentation the fermented dhool was dried at 120°C in a tray drier for about 20 minutes until it reached a moisture content less than 5% by weight to obtain a black leaf tea product.

Example C:

Fresh tea leaves were collected from South Indian tea plantation followed by 18 hours of withering. After that the tea leaves were subjected to CTC (cut tear curl) for 4 times to obtain macerated dhool. The macerated dhool was then fermented (exposed to air at 25 °C) for 90 minutes. Then the dhool was subjected to shear by passing the dhool through a screw press (Model No: Vincent ® CP4) at a pressure of about 2 bar. The diameter of the screw press used was 12.7 cm, the channel depth of 0.1 cm and it was operating at 25 rpm (rotational speed). The shear was calculated to be 9969.5/s. The residence time for the shear step was about 2 minutes. The filling percentage for this experiment was 40% of the instrument's capacity. This dhool was then followed by drying at about 120°C (thermal drying) till the moisture level went down to less than 5% by weight to obtain a black leaf tea product.

Example D:

Fresh tea leaves were collected from South Indian tea plantation followed by 18 hours of withering. After that the tea leaves were subjected to maceration by orthodox process to obtain macerated dhool. The orthodox process of maceration was done by using an orthodox roller (supplied by Tea crafts company, Coimbatore, India). Tea leaves were placed at the bottom place of roller and the top roller was brought down close to the bottom roller with a gap for 5 to 10 mm and rolled the tea leaves. The rolling time was 120 minutes. The macerated dhool was then fermented (exposed to air at 25°C) for 90 minutes followed by drying the fermented dhool at 120°C (thermal drying) till the moisture level went down to less than 5% by weight to obtain a black leaf tea product.

Example E:

In this example the black leaf tea product was prepared by taking fresh tea leaves from South Indian tea plantation. These leaves were then placed in an air-tight aseptic plastic bag, sealed and incubated for 18 hours at around 25°C. After that the tea leaves were subjected to maceration by orthodox process to obtain macerated dhool. The orthodox process of maceration was same as mentioned in Example D. After that the macerated dhool was fermented (exposed to air at 25°C) for 90 minutes. After this the dhool was dried at 120°C in a tray drier for about 20 minutes until it reached a moisture content less than 5% by weight to obtain a black leaf tea product.

Example 1:

In this example the black leaf tea product was prepared by taking fresh tea leaves from South Indian tea plantation. These leaves were then placed in an air-tight aseptic plastic bag, sealed and incubated for 18 hours at around 25°C. After that the tea leaves were subjected to CTC (cut tear curl) for 4 times to obtain macerated dhool. After that the dhool was fermented (exposed to air at 25°C) for 90 minutes. After the fermentation the dhool was then subjected to shear. The process of providing shear and the conditions are same as mentioned in Example C. After that the dhool was dried at 130°C in a tray drier for about 20 minutes until it reached a moisture content less than 5% by weight to obtain a black leaf tea product.

All the above tea products were then analyzed for a* value, delivered polyphenols content (DPP) and delivered theaflavins content (DTF) using the procedure as described above.

The results are summarized in the following Table 1.

Table 1

| Example Number | a* value | DPP content (wt %) | DTF content (wt %) |
|---|---|---|---|
| A | 6 | 5.50 | 0.59 |
| B | 9 | 6.33 | 0.82 |
| C | 6.5 | 5.75 | 0.64 |
| D | 2.7 | 3.80 | 0.15 |
| E | 3 | 4 | 0.20 |
| 1 | 15 | 7.70 | 1.01 |

From the above Table 1, it is evident that the tea product obtained by the process of the present invention provides extremely higher red colour (a*) value when compared with the controls. The a* value for Example 1 is much higher than any of the control Example A to E. At the same time it can also be observed from the above table that the DPP and DTF content for the tea product of Example 1 is higher than any of the control Example A to E.

The ethanol content and the lactic acid content also measured from the product of the present invention.

The Lactic acid content of Example 1 found to be 0.5% by weight. The Lactic Acid content was measured using the procedure as described previously.

The ethanol content of Example 1 found to be 0.01 % by weight. The Ethanol content was measured using the procedure as described previously.

Effect of filling percentage of the dhool on polyphenol delivery

For this experiment, the sample was prepared by following the procedure as described under Example 1. The only difference is that, the filling percentage was varied and the resulting DPP content was measured for each sample.

The results of the experiment are summarized in the following Table 2.

Table 2:

| % filling | DPP content (wt. %) |
|---|---|
| 5 | 7.30 |
| 10 | 7.35 |
| 20 | 7.36 |

(continued)

| % filling | DPP content (wt. %) |
|---|---|
| 30 | 7.40 |
| 50 | 7.90 |
| 70 | 7.97 |
| 80 | 7.98 |

From the above Table it is evident that DPP content is almost constant from filling percentage of 5% to 30%. After 30% of filling, the DPP starts increasing. Around 80% of filling it reaches a maximum. This is believed to be due to the fact that over filling of the instrument (screw press in this case) results in slipping and choking. Hence, no additional benefit of shear was observed. Therefore, it is clear from the data in Table 2 that the benefit of shear particularly favourable at a percentage filling of from 30% to 80%.

Effect of different tea products on the infusion kinetics

For this experiment 2 g of black leaf tea of Example A, Example B, Example C and Example 1 were brewed separately in 250 mL each of hot water (at 90°C) with continuous stirring. After certain intervals, the samples were taken for the measurement of colour absorbance at 445 nm using spectrophotometer (Shimadzu UV 1601). The higher the value of absorbance, the better is the infusion.

The results are summarized below in Table 3;

Table 3

| Infusion Time (s) | Absorbance (445 nm) | | | |
|---|---|---|---|---|
| | Example A | Example B | Example C | Example 1 |
| 15 | 0.05 | 0.08 | 0.07 | 0.11 |
| 30 | 0.18 | 0.24 | 0.21 | 0.31 |
| 60 | 0.31 | 0.43 | 0.38 | 0.54 |
| 90 | 0.40 | 0.53 | 0.48 | 0.68 |
| 120 | 0.46 | 0.61 | 0.56 | 0.77 |

From the above table, it is evident that Example 1 provides much better infusion at any point of time than any of Examples A, B or C. It is also observed that the infusion benefits provided by Example 1 is non-additive when compared to the respective control.

Therefore from the above description and examples it is clear that the present invention provides a process of producing a tea product wherein the final tea product has an improved red colour (a* value), and increased DPP and DTF content.

## Claims

1. A process of producing a tea product comprising the steps of:

   a. incubating fresh leaf at a temperature in the range 4°C to 60 °C under anaerobic conditions for a period of 4 to 36 hours;
   b. subjecting the incubated leaf to comminution to produce comminuted dhool; and
   c. subjecting the comminuted dhool to a step of shear for 30 seconds to 15 minutes by passing the dhool though an instrument with shear rate in the range of 5000 /s to 25000 /s wherein the shear rate is defined as:

$$\text{Shear Rate} = \frac{\pi * D * N}{H}$$

wherein D is the shaft diameter, H is the channel depth and N is the rotational speed, and wherein the filling percentage of the dhool in the instrument is in the range from 40 to 80% of the capacity.

2. A process as claimed in claim 1 wherein the filing percentage of the dhool in said instrument is in the range from 50% to 80% of the capacity.

3. A process as claimed in any one of the preceding claim 1 or 2 further comprises the step of drying after step (c) at a temperature of 80°C to 130°C to obtain the black leaf tea product.

4. A process as claimed in claim 1 wherein the shear rate at step (c) is in the range of 10000 /s to 25000 /s.

5. A process as claimed in claim 1 wherein the pressure applied at step (c) is in the range of 0.1 to 10 bars.

6. A process as claimed in any one of the preceding claims wherein the instrument is selected from screw press or plough shear mixer.

7. A process as claimed in any one of the preceding claims wherein the moisture content of the fresh leaf is in the range of 60 to 80% by weight of the tea leaf.

8. A process as claimed in any one of the preceding claims wherein the comminuted dhool undergoes fermentation.

9. A process as claimed in any one of the preceding claims wherein the anaerobic conditions are achieved by:

   i. placing the fresh tea leaf in a container, and closing the container; or
   ii. placing the tea leaf in a container, purging a gas other than oxygen through the container, and closing the container, or placing the leaf in an airtight chamber or under vacuum.

**Patentansprüche**

1. Verfahren zur Herstellung eines Teeproduktes, das die Schritte umfasst:

   a. Inkubieren von frischem Blatt bei einer Temperatur in dem Bereich von 4°C bis 60°C unter anaeroben Bedingungen für eine Zeitdauer von 4 bis 36 Stunden;
   b. Zerkleinern des inkubierten Blattes, um ein zerkleinertes Dhool herzustellen; und
   c. das zerkleinerte Dhool wird für 30 Sekunden bis 15 Minuten lang einem Scherungsschritt ausgesetzt, indem das Dhool durch ein Instrument mit einer Schergeschwindigkeit in dem Bereich von 5000/s bis 25000/s geführt wird, wobei die Schergeschwindigkeit definiert wird als:

$$\text{Schergeschwindigkeit} = \frac{\pi * D * N}{H},$$

   wobei D der Wellendurchmesser ist, H die Kanaltiefe ist und N die Drehzahl ist und wobei der Prozentsatz der Füllung des Dhools in dem Instrument in dem Bereich von 40 bis 80% der Kapazität liegt.

2. Verfahren, wie im Anspruch 1 beansprucht, wobei der Prozentsatz der Füllung des Dhools in dem Instrument in dem Bereich von 50% bis 80% der Kapazität liegt.

3. Verfahren, wie in irgendeinem der vorhergehenden Ansprüche 1 oder 2 beansprucht, das ferner den Trocknungsschritt nach Schritt (c) bei einer Temperatur von 80°C bis 130°C umfasst, um das schwarze Blattteeprodukt zu erhalten.

4. Verfahren, wie im Anspruch 1 beansprucht, wobei die Schergeschwindigkeit im Schritt (c) in dem Bereich von 10000/s bis 25000/s liegt.

5. Verfahren, wie im Anspruch 1 beansprucht, wobei der im Schritt (c) angelegte Druck in dem Bereich von 0,1 bis 10 bar liegt.

**6.** Verfahren, wie in irgendeinem der vorhergehenden Ansprüche beansprucht, wobei das Instrument unter einer Schneckenpresse oder einem Pflugschermischer ausgewählt ist.

**7.** Verfahren, wie in irgendeinem der vorhergehenden Ansprüche beansprucht, wobei der Feuchtigkeitsgehalt des frischen Blatts in dem Bereich von 60 bis 80 Gewichts-% des Teeblatts liegt.

**8.** Verfahren, wie in irgendeinem der vorhergehenden Ansprüche beansprucht, wobei das zerkleinerte Dhool einer Fermentation unterliegt.

**9.** Verfahren, wie in irgendeinem der vorhergehenden Ansprüche beansprucht, wobei die anaeroben Bedingungen erreicht werden durch:

> i. Platzieren des frischen Teeblattes in einem Behälter und Schließen des Behälters; oder
> ii. Platzieren des Teeblattes in einem Behälter, Durchspülen des Behälters mit einem Gas, anders als Sauerstoff, und Schließen des Behälters oder Platzieren des Blattes in einer luftdichten Kammer oder unter Vakuum.

**Revendications**

**1.** Procédé de production d'un produit de type thé comprenant les étapes de :

> a. incubation d'une feuille fraîche à une température dans la plage de 4°C à 60°C dans des conditions anaérobies pendant une durée de 4 à 36 heures ;
> b. exposition de la feuille incubée à un broyage pour produire un dhool broyé ; et
> c. exposition du dhool broyé à une étape de cisaillement pendant 30 secondes à 15 minutes par passage du dhool dans un instrument avec une vitesse de cisaillement dans la plage de 5000/s à 25000/s où la vitesse de cisaillement est définie comme :

$$\text{vitesse de cisaillement} = \frac{\pi * D * N}{H}$$

où D est le diamètre de l'arbre, H est la profondeur du canal et N est la vitesse de rotation, et où le pourcentage de remplissage du dhool dans l'instrument est dans la plage de 40 à 80 % de la capacité.

**2.** Procédé selon la revendication 1 où le pourcentage de remplissage du dhool dans ledit instrument est dans la plage de 50 % à 80 % de la capacité.

**3.** Procédé selon l'une quelconque des revendications 1 ou 2 précédentes comprend en outre l'étape de séchage après l'étape (c) à une température de 80°C à 130°C pour obtenir le produit de type thé à feuilles noires.

**4.** Procédé selon la revendication 1 où la vitesse de cisaillement dans l'étape (c) est dans la plage de 10000/s à 25000/s.

**5.** Procédé selon la revendication 1 où la pression appliquée dans l'étape (c) est dans la plage de 0,1 à 10 bars.

**6.** Procédé selon l'une quelconque des revendications précédentes où l'instrument est choisi parmi une presse à vis ou un mélangeur à cisaillement à socs.

**7.** Procédé selon l'une quelconque des revendications précédentes où la teneur en humidité de la feuille fraîche est dans la plage de 60 à 80 % en poids de la feuille de thé.

**8.** Procédé selon l'une quelconque des revendications précédentes où le dhool broyé subit une fermentation.

**9.** Procédé selon l'une quelconque des revendications précédentes où les conditions anaérobies sont obtenues par :

i. mise en place de la feuille de thé fraîche dans un récipient, et fermeture du récipient ; ou

ii. mise en place de la feuille de thé dans un récipient, passage d'un gaz différent de l'oxygène dans le récipient, et fermeture du récipient, ou mise en place de la feuille dans une chambre étanche à l'air ou sous vide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080118602 A
- WO 2013075912 A
- WO 2012133901 A